# EUROPÄISCHE PATENTSCHRIFT

(11) **EP 0 855 782 B1**
(45) Veröffentlichungstag und Bekanntmachung des Hinweises auf die Patenterteilung: **12.01.2005**
(21) Anmeldenummer: 97101142.4
(22) Anmeldetag: 24.01.1997
(51) Int. Cl.: H02K 5/15, H02K 5/24

(54) **Geräuscharmer Elektromotor, insbesondere zum Antrieb eines Kraftfahrzeug-Lüfters**
Low noise electric motor, notably for a fan of a motor vehicle
Moteur électrique silencieux, notamment pour l'entraînement d'un ventilateur d'automobile

(43) Veröffentlichungstag der Anmeldung: 29.07.1998
(73) Patentinhaber: SIEMENS AKTIENGESELLSCHAFT, 80333 München (DE)
(72) Erfinder: Hartmann, Uwe, 97956 Werbach-Wenkheim (DE); Berg, Ralf, 97080 Würzburg (DE)

(56) Entgegenhaltungen:
- EP-A- 0 712 195
- WO-A-96/37032
- DE-A- 19 523 123
- DE-U- 29 508 398
- FR-A- 1 320 919
- GB-A- 939 508

## Beschreibung

Die Erfindung bezieht sich auf einen geräuscharmen Elektromotor, insbesondere zum Antrieb eines Kraftfahrzeug-Lüfters, gemäß Patentanspruch 1.

Durch die DE 37 07 600 A1 ist ein geräuscharmer Pumpenantrieb bekannt, bei dem zur Vermeidung einer Geräuschübertragung vom Rotor über Lagerhalter zum Motorgehäuse vorgesehen ist, die Lager jeweils in einem Lagerhalter aus elastischem Material anzuordnen. Die Lagerhalter für das im bekannten Fall vorgesehene Zylinderlager sind dabei als elastische Ringkörper ausgebildet, welche innenseitig jeweils das Lager tragen und außenumfangsseitig von einer das Motorgehäuse nach außen hin abschließenden Stirnwand umfaßt sind.

Durch das DE-GM 295 08 398 ist ein geräuscharmer Elektromotor bekannt, bei dem zur Vermeidung einer Geräuschübertragung vom Rotor über die Lagerbügel zum Motorgehäuse zweigeteilte Lagerbügel mit einem ersten statorseitigen Lagerbügelteil und einem zweiten lageraufnahmeseitigen Lagerbügelteil und einem die beiden Lagerbügelteile verbindenden Dämpfungsteil vorgesehen sind. Das Geräuschdämpfungsteil soll bevorzugt aus einem Elastomer, insbesondere einem Naturkautschuk, einem Silikon oder einem Etylenpolymer bestehen.

Der Erfindung liegt die Aufgabe zugrunde, einen geräuscharmen Elektromotor zu schaffen, der bei für eine Fertigung als Massenserienprodukt einfachem, insbesondere automatengerechtem, Aufbau die Übertragung rotorseitiger Geräusche auf den Stator bzw. das Motorgehäuse und ein gegebenenfalls dieses Motorgehäuses aufnehmendes Bauteil, insbesondere ein Lüfteraggregat in einem Kraftfahrzeug , unterdrückt. Die rotorseitigen Geräusche sind insbesondere magnetisch bedingt sowie bei einem Kommutatormotor durch die Laufgeräusche der den Kommutator beschleifenden Bürsten hervorgerufen.

Die Lösung dieser Aufgabe gelingt erfindungsgermäß durch die Lehre des Anspruchs 1; vorteilhafte Ausgestaltungen der Erfindung sind jeweils Gegenstand der Unteransprüche.

Die erfindungsgemäße Lösung erlaubt in vorteilhafter Weise die Verwendung üblicher Lager und Lageraufnahmen, insbesondere Lagerbügel, bei gewährleisteter Geräuscharmut und montagetechnisch einfacher statorseitiger Befestigung der Lageraufnahmen am Motorgehäuse über die erfindungsgemäßen Befestigungsteile ohne Gefahr von störenden Fluchtungsfehlern; die Geräuschdämpfungsteile sind entgegen einer lagernahen Anordnung weniger wärmebelastet und können aufgrund ihrer Umfassung der Halterungsteile mit Andruck durch das Befestigungsteil bei gewährleisteter Geräuschisolierung eine große Steifigkeit der gesamten Lagerhalterung sichern.

In weiterer Fertigungs- und Montagevereinfachung sind im Sinne einer in nur einem Arbeitsschritt montierbaren Baueinheit das Geräusch-Dämpfungsteil und gegebenenfalls auch das Befestigungsteil am Halterungsteil vormontiert; dazu ist das Dämpfungsteil taschenförmig als Aufsteckteil auf an das Halterungsteil einstückig angeformte Halterungsnasen ausgebildet.

Die Erfindung sowie weitere vorteilhafte Ausgestaltungen der Erfindung gemäß Merkmalen der Unteransprüche werden im folgenden anhand in der Zeichnung schematisch dargestellter Ausführungsbeispiele näher erläutert; darin zeigen:
- FIG 1: Die radiale Draufsicht auf ein lagerseitiges Ende eines Elektromotors mit einem am Motorgehäuse durch Verstemmen befestigten Lagerbügel mit Geräuschdämmung;
- FIG 2: die radiale Draufsicht auf ein lagerseitiges Ende eines Elektromotors mit einem am Motorgehäuse durch Verschweißen befstigten Lagerbügel mit Geräuschdämmung;
- FIG 3: die axial stirnseitige Draufsicht auf einen am Motorgehäuse anliegenden Lagerbügel ohne Befestigungsteil jedoch mit vormontiertem Geräusch-Dämpfungsteil;
- FIG 4: die axial stirnseitige Draufsicht auf ein Befestigungsteil;
- FIG 5-7: ein Dämpfungsteil in radialer Draufsicht, axialer Draufsicht und radialer Unteransicht;
- FIG 8: das Dämpfungsteil gemäß FIG 5 im Schnittverlauf VIII-VIII;
- FIG 9: die radiale Innen-Draufsicht auf eine Motorgehäusehälfte vor deren Bestückung;
- FIG 10: die axial stirnseitige Draufsicht auf ein Motorgehäuse mit erfindungsgemäß gehaltertem Lagerbügel;
- FIG 11: in axialem Schnitt einen bekannten Kommutatormotor mit zweigeteilten Lagerbügeln mit zwischenliegendem Geräusch-Dämpfungsteil.

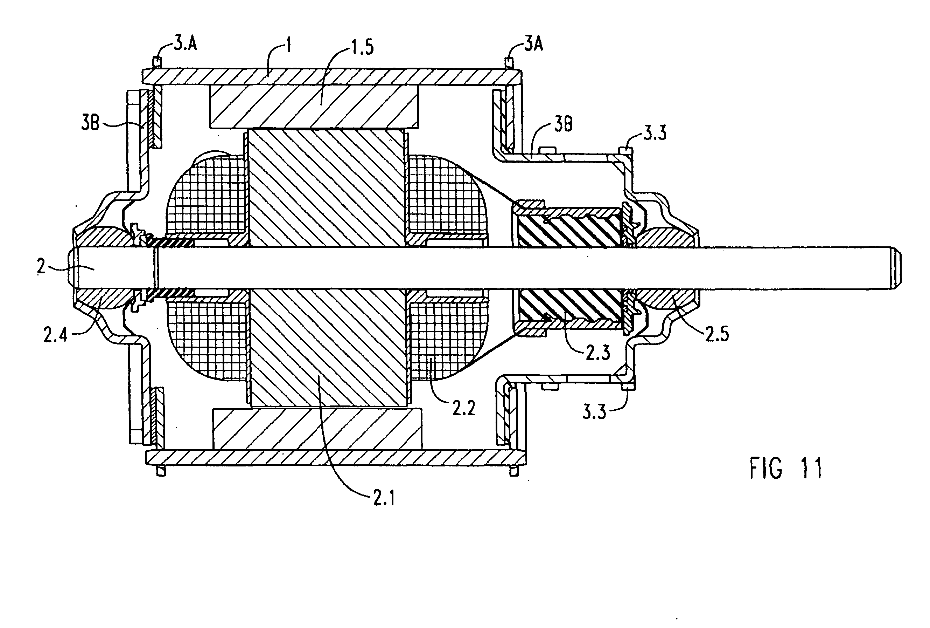

FIG 11 zeigt einen bekannten Kommutatormotor mit einem Stator-Motorgehäuse 1, an dessen Innenumfang Permanent-Erregermagnete 1.5 gehalten sind, und mit einer in beidseitigen Kalottenlagern 2.4;2.5 gelagerten Rotorwelle 2, auf der ein Rotorpaket 2.1 mit einer Rotorwicklung 2.2 gehalten ist, die an einen Kommutator 2.3 angeschlossen ist. Zur statorseitigen Halterung der Kalottenlager 2.4 bzw.2.5 sind an beiden Stirnseiten des Motorgehäuses 1 Lagerbügel 3 vorgesehen, die aus jeweils einem ersten statorseitigen Lagerbügelteil 3A und einem zweiten lagerseitigen Lagerbügelteil 3B bestehen und unter Zwischenlage eines Geräusch-Dämpfungsteils miteinander verbunden sind; dazu übergreifen sich der jeweils erste Lagerbügelteil 3A und der jeweils zweite Lagerbügelteil 3B mit einem vorzugsweise flächigen gegenseitigen Anlageteil, zwischen denen das ebenfalls im wesentlichen flächige Geräusch-Dämpfungsteil gehalten ist. Die Geräusch-Dämpfungsteile bestehen vorzugsweise aus einem Elastomer. Die radial äußeren Enden der äußeren Lagerbügelteile 3A sind zweckmäßigerweise mit den Stirnseiten des Motorgehäuses 1 verstemmt bzw. verschweißt.

Den Kommutator 2.3 beschleifende, am Lagerbügel 3 zwischen axialen Anschlägen 3.3 schwenkbar gelagerte Hammerbürstenhalter sind zur deutlicheren Darstellung des hier Wesentlichen nicht eingezeichnet.

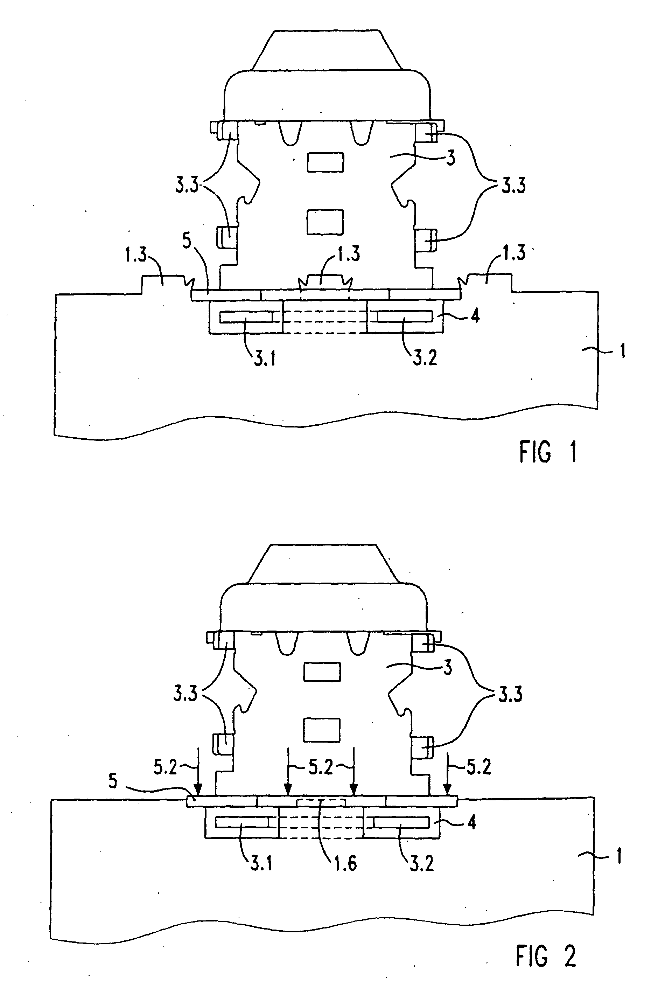

Die Verhinderung einer Übertragung von rotorseitigen Geräuschen über die Lagerbügel 3 auf das Motorgehäuse 1 wird im folgenden anhand der Figuren 1 bis 10 erläutert.

Zur Befestigung der Lagerbügel 3 am Motorgehäuse 1 greifen die Lagerbügel 3 an ihren radial äußeren Enden mit jeweils zwei radial vorstehenden Halterungsnasen 3.1;3.2, auf die zuvor ein Geräusch-Dämpfungsteil 4 mit Taschen 4.1 bzw.4.2 aufgesteckt ist, in axial stirnseitige Ausnehmungen 1.1;1.2 des Motorgehäuses 1 und sind durch ein anschließend gegengedrücktes und mit der Stirnseite des Motorgehäuses 1 verbundenes Befestigungsteil 5 lagefixiert; ein Verbindungs-Dämpfungsteil 4.3 liegt zur Geräuschdämpfung zwischen dem übrigen umfangsseitigen Lagerbügelteil und dem Motorgehäuse 1; zweckmäßigerweise sind die Taschen 4.1 und 4.2 des Dämpfungsteils sowie das Verbindungs-Dämpfungsteil 4.3 zu einem einstückigen Geräusch-Dämfpungsteil 4 zusammengefaßt, das durch Aufstecken auf den Lagerbügel 3 an diesem vormontierbar ist.

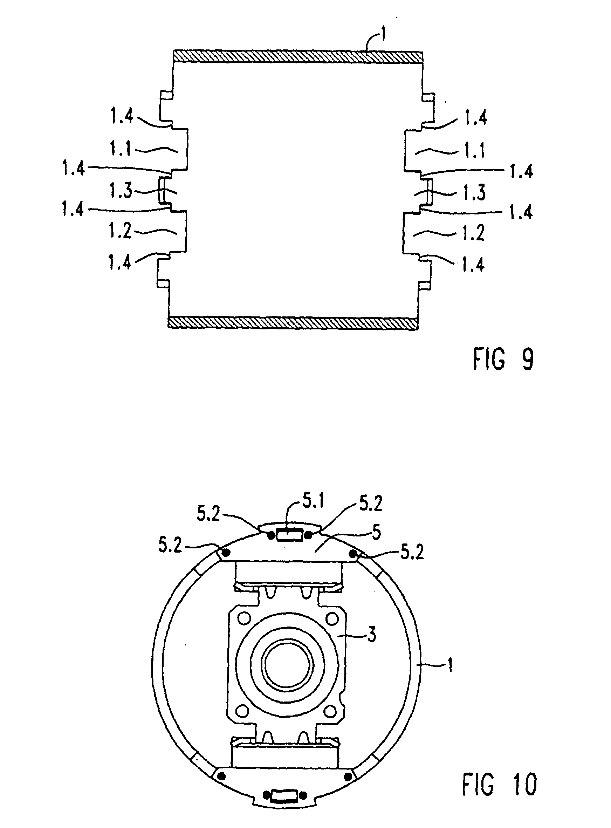

FIG 1 zeigt die Fixierung durch Verstemmen eines beide Halterungsnasen 3.1 bzw. 3.2 mit übergestülptem Geräusch-Dämpfungsteil 4 andrückenden gemeinsamen Befestigungsteils 5 mittels Verstemmung am Motorgehäuse 1. Dazu ist nach dem Einlegen der Halterungsnasen 3.1;3.2 mit übergestülptem Geräusch-Dämpfungsteil 4 in die - aus FIG 9 ersichtlichen - axialen Ausnehmungen 1.1;1.2 des Motorgehäuses das Befestigungsteil 5 auf Anlagekanten 1.4 des Motorgehäuses 1 aufgelegt und sind Verstemmnasen 1.3 - wie aus FIG 1 ersichtlich - im Sinne einer Festlegung des Befestigungsteils 5 am Motorgehäuse 1 durch Verstemmen verformt.

FIG 2 bzw. FIG 10 zeigen alternativ zu FIG 1 bzw. FIG 9 die Fixierung des Befestigungsteils 5 am Motorgehäuse 1 durch vier Schweißpunkte 5.2.

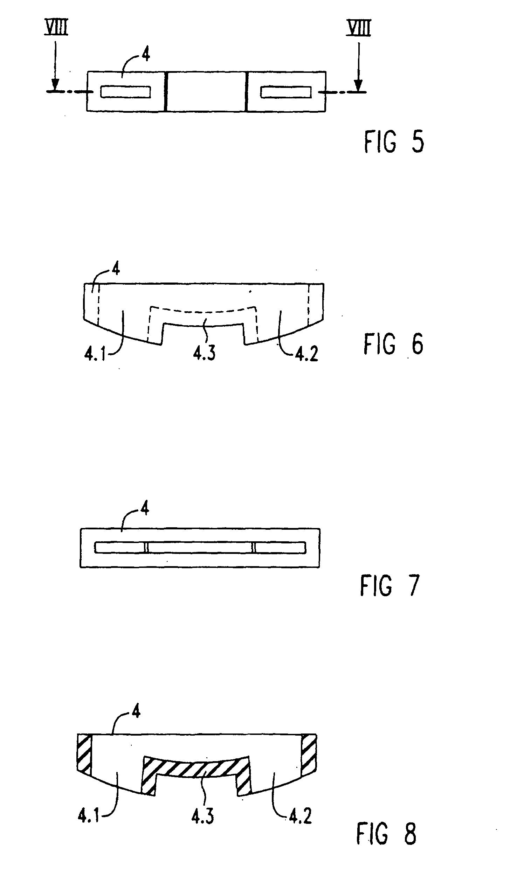

Im Sinne einer vorteilhaften Vormontagemöglichkeit der Geräusch-Dämpfungsteile 4 an dem am Motorgehäuse 1 befestigten Lagerbügel 3 sind - wie insbesondere aus FIG 5 bis FIG 8 ersichtlich - jeweils die Geräusch-Dämpfungsteile eines Lagerbügelendes einteilig zusammengefaßt und mit den Halterungsnasen 3.1;3.2 der Lagerbügel 3 angepaßten eingeformten Taschen 4.1;4.2 versehen, mittels derer die Geräusch-Dämpfungsteile 4 vor der Montage der Lagerhalterung am Motorgehäuse 1 auf einfache Weise auf die Halterungsnasen 3.1;3.2; aufsteckbar und derart mit der Lagerhalterung vorfixierbar sind.

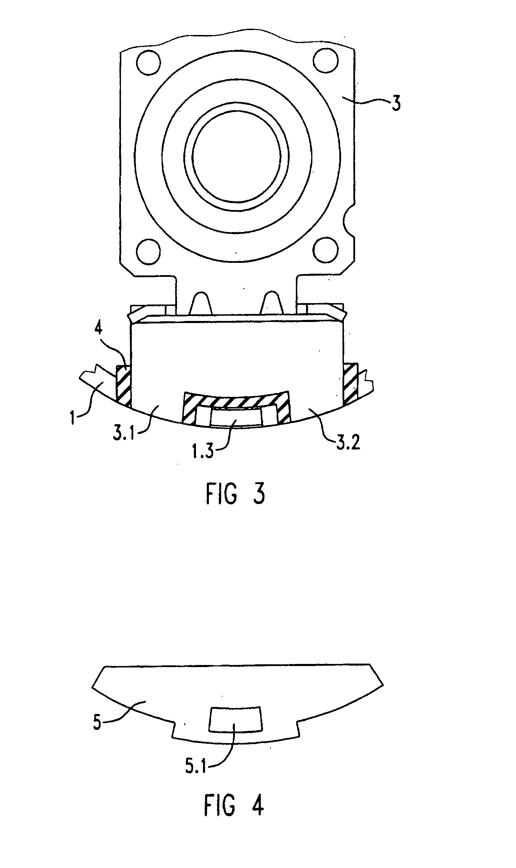

Wie insbesondere aus FIG 4 ersichtlich, weist das Befestigungsteil 5 eine Führungsöffnung 5.1 auf, die eine Ausrichtung des Befestigungsteils 5 relativ zum Motorgehäuse 1 erleichtert und gemäß FIG 1 eine Verstemmung durch die mittlere Verstemmnase 1.3 zwischen den beiden seitlichen Halterungsnasen 3.1;3.2 ermöglicht; beim Verschweißvorgang gemäß FIG 2 greift eine Führungsnase 1.6 des Motorgehäuses 1 ausrichtend in die Führungsöffnung 5.1 des Befestigungsteils 5 ein.

Zur besonders genauen fluchtenden Ausrichtung des über die Rotorwelle 2, die Kalottenlager 2.4;2.5 und die Lagerbügel 3 am Motorgehäuse 1 befestigten Rotors kann zweckmäßigerweise vorgesehen werden, den Rotor nach seiner Bestückung mit den Lagern und den Lagerbügeln in einer Vorrichtung ausgerichtet relativ zum Motorgehäuse aufzunehmen und in dieser ausgerichteten gegenseitigen Zuordnung die Befestigungsteile am Motorgehäuse zu fixieren, wobei durch entsprechenden Andruck und durch die formschlüssige Aufnahme der Halterungsnasen in den Ausnehmungen des Motorgehäuses die gegenseitigen Ausrichtung von Rotor zu Stator gesichert ist.

## Patentansprüche

1. Geräuscharmer Elektromotor, insbesondere zum Antrieb eines Kraftfahrzeug-Lüfters, der ausgestattet ist
- mit zumindest einer an einem Motorgehäuse (1) befestigten Lageraufnahme, insbesondere Lagerbügel (3);
- mit einem Geräusch-Dämpfungsteil (4) zwischen dem Motorgehäuse (1) einerseits und der Lageraufnahme, insbesondere dem Lagerbügel (3), bzw. dem Befestigungsteil (5) andererseits in deren Anlagebereich an dem Motorgehäuse (1) und
- mit zumindest einem die Lageraufnahme, insbesondere den Lagerbügel (3), über das Geräusch-Dämpfungsteil (4) an dem Motorgehäuse (1) fixierenden und dazu mit dem Motorgehäuse (1) in unmittelbarer Verbindung stehenden Befestigungsteil (5), insbesondere einer Befestigungsplatte
**gekennzeichnet durch** zumindest eine in eine vorzugsweise axiale Ausnehmung (1.1;1.2) des Motorgehäuses (1) einlegbare, mit der Lageraufnahme einstückige Halterungsnase (3.1 bzw.3.2) mit taschen- bzw. hülsenförmigem, auf die Halterungsnase (3.1;3.2) aufsteckbaren Geräusch-Dämpfungsteil (4) und mit stirnseitig an dem Motorgehäuse (1) befestigten, die Ausnehmung mit der eingelegten Halterungsnase übergreifenden Befestigungsteil (5).

2. Geräuscharmer Elektromotor nach dem vorhergehenden Anspruch
- mit jeweils durch das Befestigungsteil (5) über das Gerausch-Dampfungsteil (4) gegen das Motorgehäuse (1) angedrückter Lageraufnahme, insbesondere Lagerbügel (3).

3. Geräuscharmer Elektromotor nach zumindest einem der vorhergehenden Ansprüche
- mit einem Befestigungsteil (5) mit einem ersten, die Lageraufnahme, insbesondere den Lagerbügel (3), über das Geräusch-Dämpfungsteil (4) an das Motorgehäuse (1) andrückenden Andruck-Bereich und einem zweiten, ohne Zwischenlage eines Geräusch-Dämpfungsteils (4) am Motorgehäuse (1) anliegenden Befestigungs-Bereich.

4. Geräuscharmer Elektromotor nach zumindest einem der vorhergehenden Ansprüche
- mit einem Geräusch-Dämpfungsteil (4) aus einem Elastomer, insbesondere einem Naturkautschuk, Silikon oder Etylenpolymer.

5. Geräuscharmer Elektromotor nach zumindest einem der vorhergehenden Ansprüche
- mit einer Blech-Lageraufnahme, insbesondere einem Blech-Lagerbügel (3), mit einstückig angeformter Blech-Halterungsnase (3.1;3.2).

6. Geräuscharmer Elektromtor nach zumindest einem der vorhergehenden Ansprüche
- mit einer Verstemmverbindung zwischen dem Befestigungsteil (5) und dem Motorgehäuse (1).

7. Geräuscharmer Elektromotor nach zumindest einem der vorhergehenden Ansprüche 1-5
- mit einer Schweißverbindung zwischen dem Befestigungsteil (5) und dem Motorgehäuse (1).

8. Geräuscharmer Elektromotor nach einem der vorhergehenden Ansprüche
- mit jeweils zumindest zwei am Umfang beabstandeten freistehenden, mit dem Lagerbügelende einstückigen Halterungsnasen (3.1;3.2) und mit auf diese aufsteckbaren Taschen (4.1;4.2) eines einstückigen Geräusch-Dämpfungsteils (4), wobei zwischen den Taschen (4.1;4.2) ein die übrige radiale Anlage der Lagerbügel (3) gegen das Motorgehäuse (1) geräuschdämpfendes Verbindungsteil (4.3) vorgesehen ist.

## Claims

1. Low noise electric motor, in particular for driving a motor vehicle fan, fitted with
- at least one bearing holder fixed to a motor housing (1), in particular a bearing bracket (3)
- a noise-damping element (4) between the motor housing (1) on the one hand, and the bearing holder, in particular the bearing bracket (3), or the fixing element (5) on the other hand, in their area of contact with the motor housing (1) and
- at least one fixing element (5) fixing the bearing holder, in particular the bearing bracket (3) to the motor housing (1) by way of the noise-damping element (4) and in addition directly connected to the motor housing (1), in particular a fixing plate **characterised by**
- at least one support lug (3.1 and 3.2) which can be inserted into a preferably axial recess (1.1, 1.2) of the motor housing (1) and forms a single part with the bearing holder,
- a pocket-shaped or sleeve-shaped noise damping element (4) which can be attached to the support lug (3.1, 3.2)
- and a fixing element (5) fixed at the front end to the motor housing (1), said fixing element covering the recess with the inserted support lug

2. Low noise electric motor according to the preceding Claim
- with a bearing holder, in particular a bearing bracket (3) pressed against the motor housing (1) by the fixing element (5) by way of the noise-damping element (4),.

3. Low noise electric motor according to at least one of the preceding Claims
- having a fixing element (5) with a first pressure area pressing the bearing holder, in particular the bearing bracket (3) onto the motor housing (1) by way of the noise-damping element (4), and a second fixing area in contact with the motor housing (1), without an intermediate noise-damping element (4).

4. Low noise electric motor according to at least one of the preceding Claims
- with a noise-damping element (4) fashioned from an elastomer, in particular a natural rubber, silicon or ethylene polymer.

5. Low noise electric motor according to at least one of the preceding Claims
- with a sheet metal bearing holder, in particular a sheet metal bearing bracket (3), with a sheet metal support lug (3.1, 3.2) forming a single part with it.

6. Low noise electric motor according to at least one of the preceding Claims
- with a caulked connection between the fixing element (5) and the motor housing (1)

7. Low noise electric motor according to at least one of the preceding Claims 1 - 5
- with a welded connection between the fixing element (5) and the motor housing (1)

8. Low noise electric motor according to one of the preceding Claims
- with at least two free-standing support lugs (3.1, 3.2) at intervals around the periphery, forming a single part with the bearing bracket end, and with pockets (4.1; 4.2) of a single-part noise damping element (4) that can be attached to these, whereby a connecting element (4.3) is provided between the pockets (4.1; 4.2) to damp the noise of the remainder of the radial area of contact of the bearing bracket (3) with the motor housing (1).

## Revendications

1. Moteur électrique silencieux, permettant notamment d'entraîner un ventilateur de véhicule automobile, pourvu des éléments suivants :
- au moins un logement de palier, notamment une bride de palier (3), fixé à un carter de moteur (1);
- un élément atténuateur de bruit (4) situé entre, d'une part, le carter de moteur (1), et, d'autre part, le logement de palier, notamment la bride de palier (3), ou l'élément de fixation (5), et ce dans leur zone d'appui contre le carter de moteur (1) et
- au moins un élément de fixation (5), notamment une plaque de fixation, fixant le logement de palier, notamment la bride de palier (3), au carter de moteur (1) par l'intermédiaire de l'élément atténuateur de bruit (4) et se trouvant, à cet effet, en liaison directe avec le carter de moteur (1),
**caractérisé par**
- au moins un bec de fixation (3.1 ou 3.2) formant une seule pièce avec le logement de palier et pouvant être inséré dans un évidement de préférence axial (1.1;1.2) du carter de moteur (1)
- un élément atténuateur de bruit (4) en forme de poche ou de douille pouvant être fixé sur le bec de fixation (3.1;3.2),
- et un élément de fixation (5) fixé sur le carter de moteur (1) du côté frontal et s'étendant par dessus l'évidement où a été préalablement inséré le bec de fixation.

2. Moteur électrique silencieux selon la revendication précédente comportant
- respectivement un logement de palier, notamment une bride de palier (3), pressé par l'élément de fixation (5) contre le carter de moteur (1), et ce par l'intermédiaire de l'élément atténuateur de bruit (4).

3. Moteur électrique silencieux selon au moins l'une des revendications précédentes comportant
- un élément de fixation (5) avec une première zone de pression, qui presse le logement de palier, notamment la bride de palier (3), contre le carter de moteur (1) par l'intermédiaire de l'élément atténuateur de bruit (4), et une deuxième zone de fixation, reposant directement contre le carter de moteur (1) sans qu' un élément atténuateur de bruit (4) soit intercalé.

4. Moteur électrique silencieux selon au moins l'une des revendications précédentes comportant
- un élément atténuateur de bruit (4) réalisé en un élastomère, notamment un caoutchouc naturel, une silicone ou un polymère éthylénique.

5. Moteur électrique silencieux selon au moins l'une des revendications précédentes comportant
- un logement de palier en tôle, notamment une bride de palier en tôle (3), pourvu d'un bec de fixation en tôle (3.1;3.2) formé en une seule pièce avec celui-ci.

6. Moteur électrique silencieux selon au moins l'une des revendications précédentes comportant
- une jonction par matage entre l'élément de fixation (5) et le carter de moteur (1).

7. Moteur électrique silencieux selon au moins l'une des revendications précédentes 1 à 5 comportant
- une jonction par soudure entre l'élément de fixation (5) et le carter de moteur (1).

8. Moteur électrique silencieux selon au moins l'une des revendications précédentes comportant
- respectivement deux becs de fixation (3.1;3.2) isolés disposés sur la circonférence à distance l'un de l'autre, formant une seule pièce avec l'extrémité de bride de palier et sur lesquels peuvent être enfoncées des poches (4.1;4.2) d'un élément atténuateur de bruit (4) formé en une seule pièce, un élément de jonction (4.3) atténuant le bruit étant prévu entre les poches (4.1;4.2) sur la partie radiale restante des brides de palier (3) qui se trouve en contact avec le carter de moteur (1).
